Europäisches Patentamt

European Patent Office

Office européen des brevets

(19)

(11) Publication number: **0 206 709**
A2

(12) **EUROPEAN PATENT APPLICATION**

(21) Application number: **86304611.6**

(22) Date of filing: **16.06.86**

(51) Int. Cl.⁴: **G 06 K 9/00**

(30) Priority: **17.06.85 US 745766**

(43) Date of publication of application: **30.12.86**
**Bulletin 86/52**

(84) Designated Contracting States: **DE FR GB**

(71) Applicant: **Visionetics Corporation, 57, Commerce Road, Brookfield Center Connecticut 06805 (US)**

(72) Inventor: **Tinnerino, Natale F., 51, Wood Road, Redding Connecticut 06896 (US)**
Inventor: **Labinger, Richard L., 22, Sabina Road, Trumbull Connecticut 06611 (US)**
Inventor: **Bryant, Timothy E., 20632, Via Jardin, Yorba Linda California 92686 (US)**

(74) Representative: **Jackson, David Spence et al, REDDIE & GROSE 16, Theobalds Road, London, WC1X 8PL (GB)**

(54) Automatic optical inspection of printed circuit boards.

(57) A camera (11) provides video data of a surface of a scanned printed circuit board (12) in real time to complementary fine and coarse flaw detectors (16, 17) which, respectively, detect flaws less than or greater than a predetermined feature size. The fine flaw detector (16) comprises programmed logic arrays for detecting different flaw types within a small patch of pixels. The image at the camera (11) is broken down into a succession of such patches for fine flaw detection. The coarse flaw detector (17) compares video data from the camera (11) with a stored master of the surface under inspection, a reference buffer memory (19) being coupled to the coarse flaw detector (17) for this purpose. The comparison is carried out by breaking the scanned surface data input patches.

# AUTOMATIC OPTICAL INSPECTION
## OF PRINTED CIRCUIT BOARDS

## BACKGROUND OF THE INVENTION

A printed circuit board comprises a substrate, typically made of fiberglass or mylar whose surface has metal lines formed thereon which are electrical conductors used to interconnect various circuit components and/or to external circuitry. In order to keep pace with the integrated circuit industry, feature sizes, i.e., the metal lines and spaces between the metal lines have shrunk to very small dimensions, e.g., 0.005 inches. While techniques for the fabrication of printed circuit boards have greatly advanced, a certain percentage of printed circuit boards come out of production with one or more of a variety of flaws. For example, a printed circuit board may have lines and/or spaces too narrow, shorts, opens, pinholes or the like; any one of which may render the printed circuit board useless. Due to the extremely small sizes involved, visual detection of such flaws is neither technically effective nor economically practical. Thus, automation of the printed circuit board inspection process is an essential requirement in the field of microelectronics.

Various techniques are presently in existence for the inspection of printed circuit boards. One such technique is the reference comparison technique and involves the comparison of a test printed circuit board with a perfect master stored in memory. This technique has the capability of detecting all possible flaws. However, to realize this capability requires extremely large memory capacities, extremely high data rates and incredibly good registration between the compared test and master images. Thus, to use such a system to detect all possible flaws is economically not feasible.

Another technique of inspecting flaws in printed circuit boards is the rules technique and consists in providing video information representative of the surface of a test board to logic arrays programmed in accordance with a plurality of rules algorithms each representative of a particular type of flaw. These logic arrays decode the video data for determination of the existence of one or more flaws. However, this type of technique is limited in that there are many defects which satisfy all the rules and, therefore, go undetected. For example, a dead short, i.e., a metal line of width equal to or greater than a feature size between metal lines or traces would satisfy all the rules and still go undetected since it would be interpreted as a typical feature on the printed circuit board.

The present invention provides a system for the inspection of printed circuit boards which overcomes the above disadvantages.

## BRIEF SUMMARY OF THE INVENTION

In carrying out the present invention a video camera scans the illuminated surface of a printed circuit board to be inspected for flaws such as metal conductor lines and spaces too narrow, shorts, open circuits and the like in the circuit patterns formed on the surface of the printed circuit board. The video camera is periodically sensitized to receive video information representative of the surface scanned and emptied of its video contents with each such event constituting a scan line. A video processor converts each scan line of video data into a digital stream of bits each representative of a picture element or pixel of the surface being scanned. The output of the video processor is fed to a fine flaw detector which detects flaws less than a minimum feature size, i.e., the width of a line or space and to a coarse flaw detector which detects flaws equal to or greater than a minimum feature size. By use of a fine flaw detector and coarse flaw detector in the unique complementary fashion of the present invention, the memory size, data rates and extremely accurate registration requirements of the reference comparison techniqus to a stored master image are greatly reduced and the problem associated with the rules technique's inability to detect certain flaws is overcome.

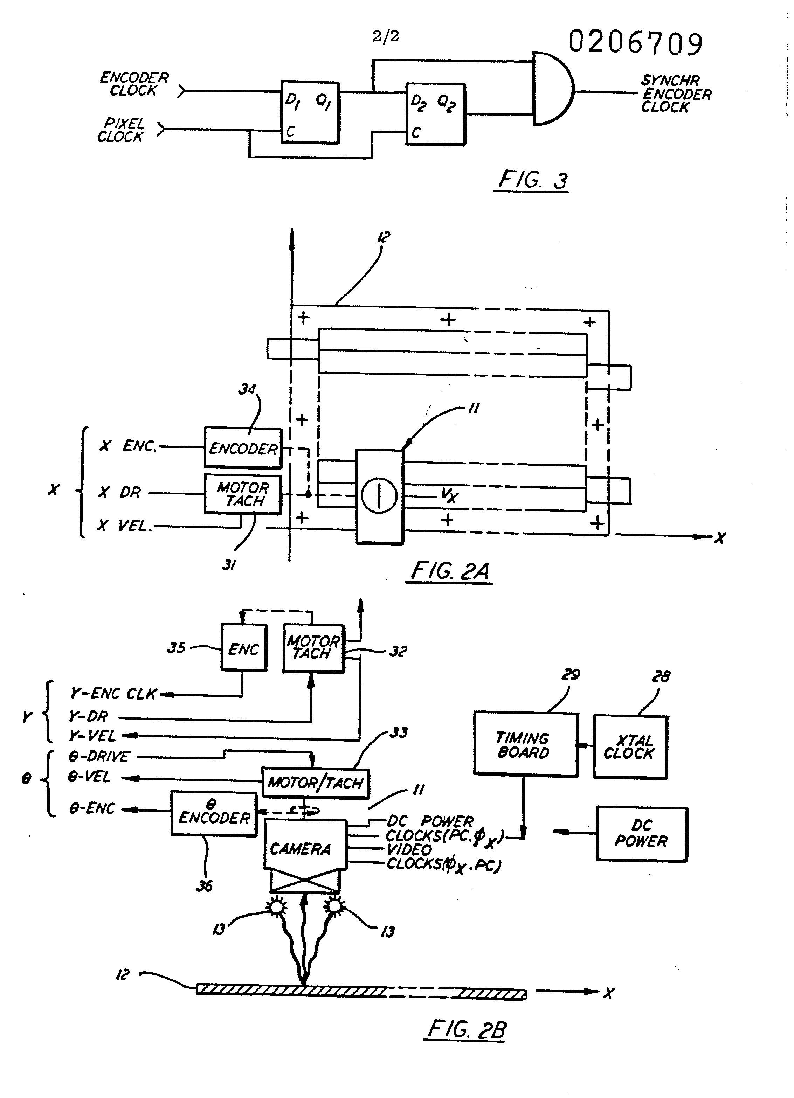

When a printed circuit board is placed on the inspection table, alignment of the camera and the printed circuit board under test is obtained by detecting and recording the locations of fiducial marks placed at each corner of the printed circuit board during manufacture. This data is compared to previously recorded locations of fiducial marks of a stored master to provide information which under computer control is used to align the printed circuit board and camera in the X and Y directions by means of X and Y servos. If desired a θ- servo may be included in order to rotationally align th test board as shown in Figure 2B and described in the section entitled DESCRIPTION OF INVENTION. This same information is also used to determine the degree of distortion of a test printed circuit board image from the standard or master image stored in memory. If the distortion of the printed circuit board is within predetermined standards, the necessary distortion correction parameters necessary to compensate for distortion are calculated and corrections are made. If the distortion of the printed circuit board is outside the predetermined tolerance, the printed circuit board is rejected. The same information is used to register the test printed circuit board image with the stored master image so that the data provided by the camera in real time representative of the surface of the scanned printed circuit board is compared with its exact counterpart of the stored master printed circuit board.

BRIEF DESCRIPTION OF THE DRAWINGS

Figure 1 is a block diagram of the printed circuit board inspection system of the present invention;

Figure 2A is a top view of the camera control system; and

Figure 2B is a front view of the camera control system; and

Figure 3 is a a block diagram showing a clock synchronization arrangement.

DESCRIPTION OF THE INVENTION

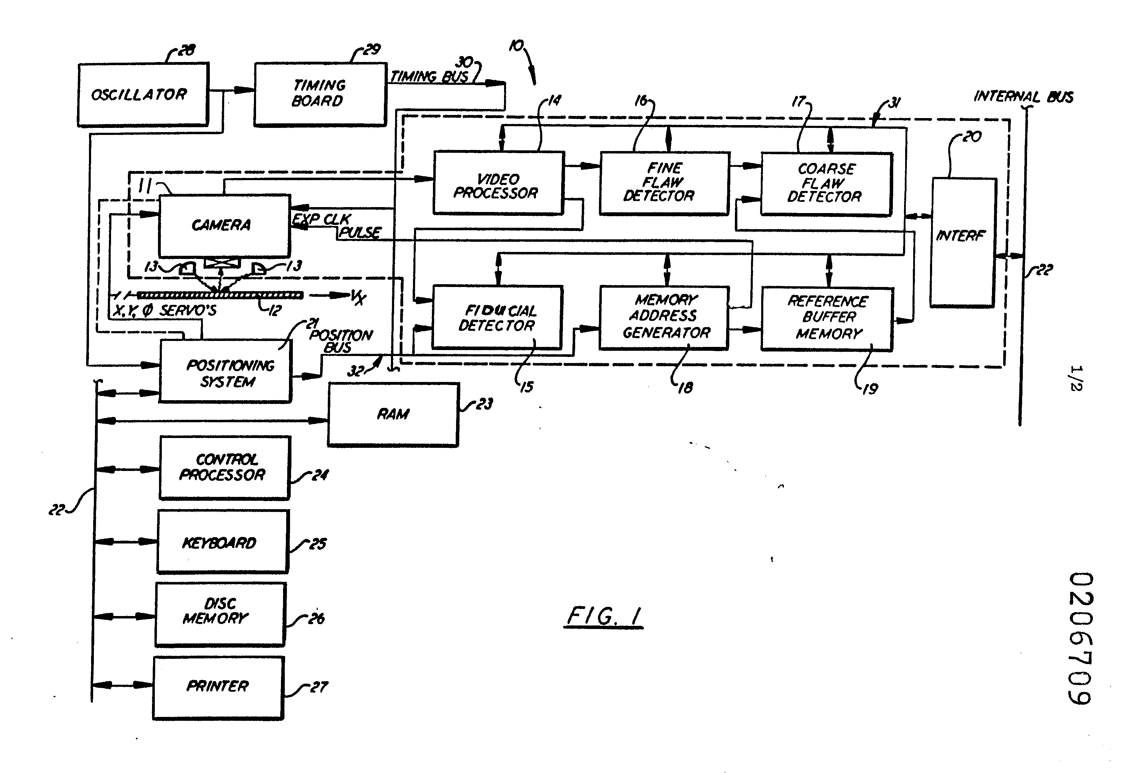

Referring to Figure 1, there is shown a block diagram of the printed circuit board inspection system 10 of the present invention. A camera 11 which may be a charged coupled device (CCD) array is disposed adjacent the surface of a printed circuit board 12 to be inspected. The camera 11 (alternately referred to as CCD array 11) is moved relative to the printed circuit board 12 to be inspected. While either the camera 11 or the printed circuit board may be the moving element, for purposes of description, the camera 11 has been selected as the moving element. Depending on the size of the surface of the printed circuit board to be inspected and the length of the CCD array, the surface to be inspected may be scanned in one scanning action or may require more than one scan to view the entire surface under inspection. As is described in reference to Figures 2A and 2B, computer controlled X, Y. and θ servos control the scanning function of camera 11.

The CCD arrays of the type used in the present invention comprise a plurality of light sensitive elements arranged in a straight line. In a practical embodiment the CCD array is a linear array having 2048 light sensitive elements and is 1.024 inches in length  Such a CCD array is available from Fairchild as the Fairchild CCD 143. Under these conditions each light sensitive (pixel) element in the CCD array is 0.0005 X 0.0005 inch square and the array is capable of resolving over its length 2048 picture elements or pixels. CCD arrays having a greater or smaller number of light sensitive elements could, of course, be used depending on the degree of resolution required and scanning swath desired.

As is well known, a CCD array has a sensitized state during which it records video data viewed and a transfer state during which it transfers the video data out for processing. Sensitization and transfer of data from the CCD array is under timing clock control as is explained hereinbelow. To inspect a surface, sensitization and transfer of video data from the CCD array must occur a large number of times. For example, if one wishes to view a surface 1.024 by 1.024 inches at the highest possible resolution then a CCD array having 2048 light sensitive elements each 0.0005 x 0.0005 inches square would have to be sensitized and emptied 2048 times during the scan. Thus, in this particular example it takes 2048 scan lines to view the entire surface. Therefore, for each scan line the CCD array outputs an analog signal representative of 2048 pixels. If the surface to be inspected exceeds 1.024 inches in the Y direction, more than one scan is required to completely scan the surface being viewed.

In carrying out image generation utilized in the present invention, the CCD array 11 is sensitized and data transferred therefrom for each scan line and this occurs at the pixel clock rate. An exposure pulse transfers the accumulated charge in the CCD array 11 into the transport register contained in the CCD array 11 and a transport register clock transfers this video data out of the CCD array 11. The exposure pulse occurs once for every line while 2048 pixel clocks occur for every scan line.

A light source 13 illuminates the surface of the printed circuit board 12 as it is scanned by the camera or CCD array 11. The light source 13 may comprise a beam of light normal to the board for smooth metal surfaces and/or light sources directing beams at oblique angles to the printed circuit board in order to properly illuminate irregular copper surfaces and substrate edges. The normal beam provides a highly reflective signal from the smooth copper surfaces back to the CCD array. Beams directed at angles provide a dark field image.

The output of camera or CCD array 11 which is in analog form is provided to video processor 14. The video processor 14 converts the analog video signal from CCD array 11 which is representative of the pixels in each scan line into a digital signal comprised of serial 0's and 1's each representative of a pixel as viewed by the CCD array in each scan line.

The video processor 14 also performs gain and offset correction on each of the 2048 detector elements that make up the CCD array in camera 11. Gain correction is accomplished by normalizing the responsivities of each of the 2048 detectors in the array while viewing a uniformly bright field. Offset correction is accomplished by normalizing the offsets (to typically zero volts) of each of 2048 detectors while viewing a dark field (lens cap on). The detector values for gain and offset corrections (2048 total) are read into the control processor 24 via internal bus 22 through interface 20. The control processor 24 then performs the computations for gain and offset correction. The correction values, 2048 for gain and 2048 for offset, are then written into the video processor gain and offset RAMS (located within video processor 14) (2048 x 8-BITS) respectively.

The gain corrections compensate not only for CCD non-uniformities but also for illumination non-uniformities as viewed in the focal plane.

While viewing the test image, the video processor 14 performs the gain and offset corrections in real time on each pixel then thresholds the analog video and outputs the

0206709

binarized pixel video. The threshold values define the transition points in the image between substrate and copper and vice versa and may also be loaded via control processor 24.

The output of video processor 14 is connected to fiducial detector 15 and fine flaw detector 16.

The fiducial detector 15 detects the location of the fiducial marks on the board under test. The locations of these marks, relative to those recorded previously when the master image was generated, allows for precise registration of the reference and test images. Also misregistration in a test image due to board distortion greater than a minimum feature size will be detected and will be sufficient cause for rejecting the board under test. Misregistration less than a minimum feature size due to distortion or other causes can be compensated by use of the measurements of the fiducial locations as described below.

Fiducial location detection is accomplished by correlating the real time test fiducial image with the like stored fiducial image. When detection occurs the corresponding x, y locations are stored. The test fiducial image is generated in the fiducial detector 15 from the video processor 14 pixel video outputs. The stored fiducial image may be downloaded into fiducial detector 14 via internal bus 22 and interface 20 from control processor 24. The x, y position data are inputted to the fiducial detector 15 from the positioning system 21 via the position bus 32. Thus the test image, from video processor 15, and its corresponding position data, from positioning system 21 are preset for fiducial detection and location.

The fiducial location data may now be read into the control processor 24 which makes the distortion correction computations (correlations) necessary for registering the references and test images, performs board misregister tests and determines the starting locations for each strip to be scanned over the entire board. In essence, this consists of a linear two dimensional matrix transformation of the test image into the reference image thereby compensating for distortion in the test board.

The fine flaw detector 16 generates an image window, typically 16 x 16 pixels in size, used to detect fine flaws. A number of specific fine flaws may be detected in the fine flaw detectors via defect masks implemented with PAL devices (Programmable Array Logic Devices). These flaws are provided to the control processor 24 by means of the internal bus through the interface 20.

A memory address generator 18 has an output connected to camera 11 and to reference buffer memory 19. Reference buffer memory 19 is connected to coarse flaw detector 17.

Video processor 14, fine flaw detector 16, coarse flaw detector 17, fiducial detector 15, memory address generator 18 and reference buffer and memory 19 are all connected to computer bus 22 via interface 20.

A positioning system 21 is mechanically connected to camera 11 for moving the camera 11 in the X, Y and (if desired) θ directions. Positioning system 21 is connected to computer bus 22 and via computer bus 22 to random access memory 23, control processor 24, keyboard 25, disc memory 26 and printer 27.

Positioning system 21 also receives an input from crystal oscillator 28. Crystal oscillator 28 provides timing signals via timing board 29 to timing bus 30 which has a connection to camera 11. Thus, timing board 29 provides timing signals which include the pixel clocks to camera 11. Any additional camera/channel module, which may be added to the system, will also be connected to timing bus 30.

Positioning system 21 has an output connected to fiducial detector 15 and memory address generator 18.

The CCD camera 11 requires both pixel clock and exposure pulse inputs in order to provide the output video signals necessary in scanning printed circuit boards. The pixel clock inputs are provided to camera 11 via timing board 29 which is driven by crystal clock 28. The exposure pulse input is provided to camera 11 via the memory address generator 18. These exposure pulses are generated in memory address generator 18 at precise spatial intervals equivalent to the pixel pitch and thus provide the proper line to line spacing (typically 0.5 mil) in the direction of motion (x-direction). The memory address generator 18 outputs these exposure clocks as a function of the input x-position provided by the positioning system 21 via the position bus 32. This is accomplished in the memory address generator 18 by performing a table look-up operation whose input address is the current value of the x-position and whose single bit output is the corresponding exposure pulse. Note that the look-up table is a RAM whose address space corresponds to the x-dimension of the Printed Circuit Board being inspected and whose single bit output is the exposure pulse. The distortion correction algorithm (executed by control processor 24) determines at what positions the exposure pulses should occur and stores the exposure pulse bits at these locations (addresses) in the RAM 23. These locations are determined by measuring the positions of the fiducial marks on the test board with respect to those measured on the reference image and performing the linear two dimensional matrix transformations of the test image into the reference image.

The exposure pulses are generated in the memory address generator 18 by reading an internal 240,000 x 1-bit RAM as the camera is moving in the x-direction. The x-position of this moving camera directly addresses this RAM. There are 240,000 locations or addresses (in this example) corresponding to 240,000 encoder clocks (10,000 per inch) over 24 inches of travel. When the single bit output of this RAM is read as a logic "one" an exposure pulse is generated at the proper location while a logic "zero" read-out means that no exposure pulse is generated at that address. Note that for the case of 0.5 mil pixel-to-pixel spacing in the direction of motion (x-direction) a maximum of 48,000 exposure pulses can occur over exactly 24 inches of travel.

Also note that prior to scanning and after the test board distortion has been determined, via the fiducial measurement of the location of the test vs reference image, the required distortion compensated 48,000 exposure pulses can be written as logical "ones" at their proper locations in the 240,000 address space of the RAM by the control processor 24.

The encoder clocks in the x-y positioning system are the basic clocks used to generate the position data output in position bus 32 which in turn generates the exposure pulses via memory address generator 18.

The x camera position output is generated by counting its x-encoder clocks from the x-axis origin (where the position counter is reset to zero) as the camera travels from 0 to 24 inches maximum. The counter will count down when the encoder senses that the camera has changed direction. In order to synchronize the exposure pulses with the pixel clocks at the CCD in camera 11, the encoder clocks are synchronized via crystal clock 28 at positioning system 21.

Synchronization may be accomplished any number of ways such as using an appropriate arrangement of flip-flops as shown in Figure 3. The relatively low frequency encoder clocks may be clocked by the much higher frequency pixel clocks as shown. This arrangement keeps the resulting jitter of the synchronized encoder clocks to within one pixel clock period, which is small relative to the approximately 2048 pixel clocks per exposure pulse. The exposure pulse is then derived from these synchronized encoder clocks as previously described.

As previously pointed out, the fiducial detector 15 which receives video inputs from the camera 11 representative of the fiducial marks located around the periphery of the board under test also has an input from the positioning system 21. The inputs from the positioning system 21 provide the real time x, y coordinate locations of the fiducial marks on the printed circuit board under test at the time of their detection by fiducial detector 15. These coordinate locations X and Y are stored in RAM 23 and are used to determine the precise X and Y coordinate locations of the fiducial marks. This enables the X and Y offsets and angle between the scan head and the printed circuit board 12 axes to be determined to permit the positioning system 21 to align camera 11 and printed circuit board 12 to each other in the X, Y and θ (if desired) direction prior to scanning of the printed circuit board 12 by camera 11. These fiducial measurements are also used to measure the amount of board distortion that may exist between the stored master and test printed circuit board images provided by camera 11. This distortion measurement permits X and Y axes distortion corrections to be made in order to maintain proper alignment or registration between reference and test images. If the distortion is greater than a predetermined amount, the board is rejected.

As previously pointed out a feature of the present flaw detection system is the complementary use of a fine flaw detector using rules algorithms in conjunction with a coarse flaw detector wherein a test board is compared with a stored master. In carrying out the present invention a unique fine flaw detection system is combined with a unique coarse flaw detection system and misregistration/distortion correction scheme. These flaw detection systems and misregistration/distortion correction schemes are fully disclosed in applications entitled "Fine Flaw Detector For Printed Circuit Boards", United States Serial No. 745,966; "Coarse Flaw Detector For Printed Circuit Board Inspection", United States Serial No. 745,967; and "Misregistration/Distortion Correction Scheme", United States Serial No. 745,968, for reference and test patch comparison technique used in the "Coarse Flaw Detector For Printed Circuit Board Inspection" identified above. Copies of the specifications and drawings of these applications are formally incorporated for disclosure purposes in this application.

However, for purposes of a fuller understanding of the present invention the fine and coarse flaw detection schemes are briefly described hereinbelow.

The fine flaw detector 16 detects flaws with dimensions less, than the nominal line/space size while the coarse flaw detector detects flaws greater than or equal to the nominal line/space size. The fine flaws are detected using rules algorithms while the coarse flaws are detected using test and reference or master image comparison techniques.

The fine flaw detector 16 receives one bit quantized video and clocks from video processor 14. It searches for flaws by viewing contiguous patches of 16 x 16 pixels over the entire board. The 16 x 16 pixel patch could, of course, be expanded to any n x n pixels. The patches are generated via an equivalent serpentine connection of "n" delay lines each followed by "n" bit shift registers.

Each delay line equals a scan line of 2048 pixels. High speed VLSI RAM's are used to perform the delay line function efficiently minimizing the overall chip count. The information so configured is provided as inputs to logic arrays programmed according to predetermined rules algorithms to detect any one of a variety of flaws in a printed circuit board.

Coarse flaw detector 17 detects coarse flaws by comparing the differences between registered test and reference patches. Overlapping 16 x 16 pixel test patches are generated from the sixteen video delay lines of the fine flaw detector 16. (accompanying specification entitled Fine Flaw Detector for P.C. Boards)  . Thus, instead of duplicating sixteen video delay lines again in the coarse flaw detector 17, these same lines may be used directly to provide sets of 16 x 16 bit patches. These are compared to 16 x 16 pixel reference patches generated from the master memory with a distortion corrected address provided by memory address generator 18. This address is generated as a function of the real time X and Y positions of the scanner via positioning system 21.

Whenever a fine or coarse flaw is detected, an interrupt is generated and sent to control processor 24 via computer bus 22. Type and location of flaws may be stored in disc memory 26 and/or printed by means of printer 27.

Keyboard 25 may be used by an operator to program the logic arrays of fine flaw detector 16, and establish accept/reject thresholds in flaw detection and the like.

Memory address generator 18 provides distortion corrected addresses to reference buffer memory 19 resulting in reference patches which are properly registered to their corresponding test patches. The distortion corrected addresses are generated as a function of real time coordinate inputs from positioning system 21 and distortion data previously measured and loaded into memory address generator 18 via computer bus 22. A distortion corrected (along the x-axis) exposure pulse to camera 11 is also generated by memory address generator 18 which properly registers and synchronizes the test patches to the reference patches. A pixel gate is also generated by the memory address generator 18 for proper registration and synchronization of the patches along the Y-axis.

The foregoing explanation presupposes the situation in which a single scan by camera 11 views the entire surface of the printed circuit board under inspection.

In the case where more than one scan of camera 11 is required to scan the surface of a printed circuit, the printed circuit board 12 is placed on a vacuum table and camera 11 and light source 13 scan the printed circuit board in a boustrophedonic manner via computer controlled servos which move camera 11 across the printed circuit board 12 in the X, Y plane as shown in Figure 2A. In this case the detection of the fiducials in order to align the printed circuit board under test is accomplished by causing the camera to scan around the perimeter of the board. In this way the positions of the fiducial marks are detected and

- 18 -

0206709

recorded. From this data control processor 24 aligns the printed circuit board 12 and camera 11 in X, Y and θ (if desired) via X, Y and θ servos 31, 32 and 33, respectively, as shown in Figures 2A and 2B included in positioning system 21.

In boustrophedonic scanning only one flaw detection camera/channel module is shown. However, additional camera/channel modules may be added in parallel to increase the instantaneous field of view and throughput. Hence, in the limit, the field of view of the camera/channels covers the entire width of the printed circuit board requiring only one scan to inspect the entire printed circuit board. In such a system (which, in fact, is the system described above in reference to Figure 1) the camera 11 is a single unit but made up of two or more CCD arrays in an abutting relationship.

Figures 2A and 2B illustrate the arrangement for controlling camera movement and wherein position and speed of the scanning camera 11 is tracked. For generality Figures 2A and 2B show the control arrangement for moving camera 11 in a boustrophedonic fashion. However, the control system is easily adaptable to a non-boustrophedonic scan by omitting data representative for the Y direction.

In Figures 2A and 2B motors 31, 32 and 33 (included in positioning system 21 of Figure 1) are connected to drive the camera in the X, Y and θ (if desired) directions. Each of the motors 31, 32 and 33 also include tachometer generators which provide signals X-VEL, Y-VEL and θ VEL, respectively, representative of velocity of the camera 11 in the X, Y and θ-(if desired) directions. Also, position encoders 34, 35 and 36 are connected to camera 11 and provide outputs representative of the instantaneous position of camera 11 at all times.

Camera 11 is "powered" up via DC power supplies as shown in Figure 2B. Camera 11 receives its input pixel clock (PC) from Timing Board 29 which derives it from crystal clock 28. The exposure pulse input to camera 11 is provided by memory address generator 18 as shown in Figure 1. Pixel video is outputted from camera 11 along with output synchronizing clocks $\emptyset_x$ and PC.

During initial alignment, camera 11 would be aligned in $\theta$ (if desired) such that the linear array (the 2048 detector elements along the x-axis) is orthogonal to the x-axis. This would be accomplished via the "$\theta$" servo comprised of motor-tach 33 and encoder 36. The $\theta$- drive input for motor 33 would be provided by positioning system 21 whose servo controls use the $\theta$- encoder angle signals inputted to positioning system 21 from motor/tach 33 and $\theta$ encoder 36 respectively. When the $\theta$-error reduces to zero, the camera is properly aligned.

Prior to scanning along the x-axis, as shown in Figure 2-A, camera 11 is positioned along the y-axis such that its CCD array is centered along the X-strip to be scanned as shown. This is accomplished by the y-position servo comprised of motor tach 32 and encoder 35 and positioning system 21. The y-drive input to motor-tach 32 is provided by positioning system 21 whose servo controls use the y-velocity and y-encoder clock (used to determine the y-position of camera 11) feedback signals from motor/tach 32 and encoder 35 respectively to properly position camera 11 in the y-direction.

- 20 -

0206709

After camera 11 has been properly positioned in x and in y, it is ready for scanning a strip along the x-axis as shown in Figure 2A. This is accomplished by driving the x-servo at a constant velocity along the x-axis. The x-servo is comprised of motor/tach 31 and encoder 34 and positioning system 21. The x-drive for motor tach 31 is provided by positioning system 21. The x-velocity and x-encoder outputs from motor tach 31 and encoder 34 respectively are inputted to positioning system 21 in order to complete the servo loop. Thus camera 11 scans along the x-axis at constant velocity generating lines of video at typically 0.5 mil spacing until the end of the active strip is detected. The x-position data is obtained via counting x-encoder clocks. The exposure ($\beta_x$) pulses which drive the camera are derived from the x-position data as described above.

After a strip has been scanned, camera 11 is repositioned along the y-axis via the y-servo such that it's CCD array is centered on the next continuous strip (except for a slight overlap in the y-direction) as shown in Figure 2-A. The x-servo then scans along the x-axis but in the opposite direction via the servo as described above. This process is repeated until the entire board has been boustrophedonically scanned in both the x and y-directions.

Other modifications of the present invention are possible in light of the above description which should not be deemed as placing limitations thereon beyond those limitations set forth in the claims which follow:

CLAIMS

1.  A system for determining flaws in the metallic lines and/or space therebetween formed on the surface of a printed circuity board, comprising:

camera means for viewing the surface and providing as an output video data representative of the surface viewed,

first flaw detector means connected to said camera means for detecting flaws in said metallic lines and/or spaces less than a predetermined size,

second flaw detector means connected to said camera means for detecting flaws in said metallic lines and/or spaces equal to or greater than a predetermined size.

2.  A system according to Claim 1 wherein said first flaw detector means comprises:

logic array means programmed to detect one or more flaw types in the metallic lines and/or spaces on the surface viewed by said camera means.

3.  A system according to Claim 2 wherein said second flaw detector means comprises:

memory means storing a master of the printed circuit board under inspection,

comparator means for comparing said video data with said stored master to detect flaws in the metallic lines and/or spaces on the surface viewed by said video camera.

4. A system according to Claim 3 further comprising:

motor means connected to said camera means for scanning said camera means in a boustrophedonic manner across the surface of the printed circuit board,

means connected to said motor means for aligning said camera means in the direction of scan prior to each scan.

5. A system according to Claim 4 further comprising:

memory means storing the coordinate location of fiducial marks on the corners or other areas of the reference printed circuit board,

motor means causing said camera means to scan around the periphery of each printed circuit board to be inspected to obtain the coordinates of said fiducial marks on said test printed circuit, prior to each inspection operation,

processor means comparing the stored coordinates with the ones provided by said camera means to provide a measure of the distortion of said test printed circuit board with said stored reference printed circuit board.

0206709

6. A system according to Claim 5 wherein,

said processor means provides an indication when said distortion exceeds a predetermined amount,

said processor means provides compensation for said distortion of said test printed circuit board relative to said reference printed circuit board when said distortion is below said predetermined amount.

7. A system according to Claim 6 further including:

illuminating means for illuminating the surface of said printed circuit board during the scanning thereof,

said illuminating means comprising,

first light source means disposed normal to the printed circuit board and,

second light source means disposed to direct light at said oblique angles to the printed circuit board.

8. A system according to Claim 7 wherein said camera means comprises:

an array of a plurality of charge coupled devices arranged in a straight line.

9.  A system according to Claim 7 wherein said camera means comprises:

a plurality of arrays of charge coupled devices in abutting relationship of sufficient length to scan said printed circuit board in a single pass.

10.  A system according to Claim 9 wherein said system is adapted to include sets of said first and second flaw detector means for each set of said plurality of arrays of said charge coupled devices.

11.  A system according to Claim 6 wherein said processor means includes;

means for registering said video data obtained from said camera means during a scan with data outputted from said memory means such that the video data representative of a test printed circuit board is registered with the data from memory representative of the reference printed circuit board.

12.  A system according to Claim 10 wherein said processor means includes;

means for registering said video data obtained from said camera means during a scan with data outputted from said memory means such that the video data representative of a test printed circuit board is precisely registered with the data from memory representative of the reference printed circuit board.

FIG. 1

FIG. 3

FIG. 2A

FIG. 2B